# EUROPEAN PATENT APPLICATION

(11) **EP 4 797 515 A1**
(43) Date of publication of application: **26.08.2026**
(21) Application number: 25158734.1
(22) Date of filing: 19.02.2025
(51) Int. Cl.: H02M 1/12, H02M 1/32, H02M 7/12, H02M 7/48, H02M 7/487

(54) **METHOD, CONTROLLER, AND COMPUTER PROGRAM FOR OPERATING A CONVERTER ARRANGEMENT, AND CONVERTER ARRANGEMENT**

(71) Applicant: ABB Schweiz AG, 5400 Baden (CH)
(72) Inventor: LUESCHER, Matthias, 5728 Gontenschwil (CH); VETTERLI, Manuel, 4053 Basel (CH)
(74) Representative: Sykora & König Patentanwälte PartG mbB

(57) **Abstract**

The invention relates to a method for operating a converter arrangement (20). The converter arrangement (20) comprises an electronic converter (22) for converting an input voltage from an energy source (18) into an output voltage to be provided to a load (24), at least one active filter cell (40, 42, 44) for reducing harmonic oscillations of the output voltage or of the input voltage, wherein the active filter cell (40, 42, 44) electrically couples an output terminal (28) of the electronic converter (22) with an input terminal of the load (24) or, respectively, wherein the active filter cell (40, 42, 44) electrically couples an input terminal (30) of the electronic converter (22) with an output terminal of the energy source (18), and a bypass arrangement (50, 52, 54) for bypassing a current to or from the electronic converter (22) around the active filter cell (40, 42, 44). The method comprises: receiving at least one sensor signal being representative of a danger for the electronic converter (22) because of an electric problem of the electronic converter (22); sending a protection signal to the electronic converter (22), wherein the protection signal and the electronic converter (22) are configured such that the electronic converter (22) activates protective firing upon receiving the protection signal; and sending a bypass signal to the bypass arrangement (50, 52, 54), wherein the bypass signal and the bypass arrangement (50, 52, 54) are configured such that the bypass arrangement (50, 52, 54) bypasses a current from the load (24) to the electronic converter (22) or, respectively, from the electronic converter (22) to the load (24) around the active filter cell (40, 42, 44) upon receiving the bypass signal.

## Description

### FIELD OF THE INVENTION

The invention relates to the field of electronic converters and the control of electronic converters. In particular, the invention relates to a method, a controller, and a computer program for operating a converter arrangement, to the converter arrangement, and to a computer-readable medium on which the computer program is stored.

### BACKGROUND OF THE INVENTION

It is known to combine an electronic converter, e.g., a power electronic converter, with an active filter. In particular, to improve an output voltage quality of the electronic converter, an H-bridge with a capacitor may be added in series to each output phase of the electronic converter, wherein the H-bridge with the capacitor is referred to as Active Filter (AF) or active filter cell.

It is further known to short circuit the output phases of the electronic converter as means of protection against damage. In particular, a commonly used method to protect the converter from damage in case of e.g. an internal short circuit, arcing, over-voltage or over-current, is to short circuit the dc-link. This method is called protection firing.

The protection firing immediately discharges the dc-link and shortens all input and output terminals. It may be preferred in electronic converters with IGCTs as semiconductors since they can handle very high short circuit currents. However, for the AF typically IGBTs are used as switches. IGBTs can carry currents up to about 2 to 5 times their rated current. Above that, the IGBT starts to desaturate (build up voltage). When an IGBT desaturates, it has to be turned-off or it will be thermally overloaded and destroyed because of excessive power losses. Furthermore, the AF is typically designed for only a fraction of the main converter voltage (e.g., a 1/3^{rd} of the voltage step of the main converter). Therefore, it cannot block the full voltage of the main converter, the back emf of a load or a grid voltage. Then, the phase current caused by the short circuit of the electronic converter may damage the AF. So, in a combination of an electronic converter utilizing protection firing and an AF, e.g., with IGBTs, the AF has to be designed to either carry the short circuit current of the load or the supply or it has to block this voltage. This would require massive over-dimensioning of the semiconductors in terms of voltage or current. However, this is expensive.

Another possibility may be the utilization of a crowbar that creates a short circuit at the load or supply terminal. However, this also would massively increase the costs for the electronic converter.

### DESCRIPTION OF THE INVENTION

It is an objective of the present invention to provide a method, a controller, and a computer program for operating a converter arrangement, which enable to provide a high output quality of an electronic converter of the converter arrangement while ensuring a safety of the converter arrangement, and/or while enabling a simple and cost-effective design of the converter arrangement. It is another objective of the present invention to provide the converter arrangement, and/or a computer-readable medium on which the computer program is stored.

This objective is achieved by the subject-matter of the independent claims. Further exemplary embodiments are evident from the dependent claims and the following description.

A first aspect relates to a method for operating a converter arrangement. The converter arrangement comprises an electronic converter for converting an input voltage from an energy source into an output voltage to be provided to a load, at least one active filter cell for reducing harmonic oscillations of the output voltage or of the input voltage, wherein the active filter cell electrically couples an output terminal of the electronic converter with an input terminal of the load or, respectively, wherein the active filter cell electrically couples an input terminal of the electronic converter with an output terminal of the energy source, and a bypass arrangement for bypassing a current to or from the electronic converter around the active filter cell. For example, when the active filter cell electrically couples the output terminal of the electronic converter with the input terminal of the load, the bypass arrangement may be configured for bypassing the current from the load to the electronic converter or from the electronic converter to the load, or when the active filter cell electrically couples the input terminal of the electronic converter with the output terminal of the energy source, the bypass arrangement may be configured for bypassing the current from the energy source to the electronic converter or from the electronic converter to the energy source. The method comprises: receiving at least one sensor signal being representative of a danger for the electronic converter because of an electric problem of the electronic converter; sending a protection signal to the electronic converter, wherein the protection signal and the electronic converter are configured such that the electronic converter activates protective firing upon receiving the protection signal; and sending a bypass signal to the bypass arrangement, wherein the bypass signal and the bypass arrangement are configured such that the bypass arrangement bypasses a current from the load to the electronic converter or, respectively, from the electronic converter to the load around the active filter cell upon receiving the bypass signal.

A second aspect relates to a controller for operating the converter arrangement. The controller comprises: a memory for storing one or more current and/or voltage values; and a processor communicatively coupled to the memory and being configured for carrying out the method as described above and in the following based on the stored current and/or voltage values.

A third aspect relates to the converter arrangement. The converter arrangement comprises: an electronic converter for converting an input voltage from an energy source into an output voltage to be provided to a load; at least one active filter cell for reducing harmonic oscillations of the output voltage or of the input voltage, wherein the active filter cell electrically couples an output terminal of the electronic converter with an input terminal of the load or, respectively, wherein the active filter cell electrically couples an input terminal of the electronic converter with an output terminal of the energy source; and a bypass arrangement for bypassing a current to or from the electronic converter around the active filter cell, e.g., as described above in context with the first aspect.

A fourth aspect relates to a computer program for operating the converter arrangement. The computer program comprises computer-readable instructions which, when being executed by a processor of the controller, carry out the method described above and in the following.

A fifth aspect relates to computer-readable medium on which the computer program is stored. The computer-readable medium may be a floppy disk, a hard disk, an USB (Universal Serial Bus) storage device, a RAM (Random Access Memory), a ROM (Read Only Memory), an EPROM (Erasable Programmable Read Only Memory) or a FLASH memory. The computer readable medium may also be a data communication network, e.g. the Internet, which allows downloading a program code. In general, the computer-readable medium may be a non-transitory or transitory medium.

It has to be understood that some features of the present invention are described with respect to one of the aspects only for conciseness reasons and to avoid unnecessary repetitions, but that these features may be easily transferred to one or more of the other aspects by the person skilled in the art.

The load may be motor, a generator, a grid, or a transformer coupled to the grid, for example. The electronic converter may comprise several semiconductor switches, e.g., several IGCTs or IGBTs. The electronic converter may be a 3-phase 3-level NPC converter or an ANPC or T-Type converter. The active filter cell may comprise several semiconductor switches, e.g., several IGBTs. The semiconductor switches may be arranged as 2-level phase legs.

The danger may be a damage of the electronic converter and/or of the active filter cell. The electric problem may be an internal short circuit of the electronic converter, an arcing phenomenon in the electronic converter, an over-voltage or an over-current in the electronic converter, and/or a short circuit at a dc-link of the electronic converter.

The sensor signal may be generated by a sensor of the electronic converter, by a sensor of the active filter cell, or of a sensor being coupled to the electronic converter or the active filter cell. The sensor may be a voltage sensor, a current sensor, or an optical sensor. The sensor signal may be representative of a measured current value exceeding a predetermined current threshold, or of a measured voltage value exceeding a predetermined voltage threshold. The current value may be representative of a current within the electronic converter or within the active filter cell. The voltage value may be representative of a voltage within the electronic converter or within the active filter cell. The current may be a phase current. The voltage may be a capacitor voltage. The current and/or voltage values may be predetermined threshold values and/or measured values.

The sending of the bypass signal may be triggered by the reception of the sensor signal or by the sending of the protection signal. The activation of the protective firing may comprise discharging the dc-link of the electronic converter and/or shortening all input terminals and all output terminals of the electronic converter.

According to an embodiment, the method comprises, after sending the protection signal and before sending the bypass signal, sending a zero-voltage signal to the active filter cell, wherein the zero-voltage signal and the active filter cell are configured such that the active filter cell outputs a zero-voltage upon receiving the zero-voltage signal. For example, the active filter cell has upper and lower semiconductor switches and the zero-voltage signal and the active filter cell are configured such that both upper semiconductor switches or both lower semiconductor switches are turned on to provide the zero voltage. After sending the zero voltage signal the bypass signal may be sent. Optionally, the bypass signal may be sent after a predetermined first delay after sending the zero-voltage signal.

According to an embodiment, the method comprises, after sending the bypass signal comprising: sending a turn off signal to the active filter cell, wherein the turn off signal and the active filter cell are configured such that all semiconductor switches of the active filter cell are turned off upon receiving the turn off signal. This may be especially advantageous in case of the zero-voltage signal having been sent to the active filter cell before sending the bypass signal. Alternatively, sending the turn off signal may be omitted. In this case, the semiconductor switches of the active filter cell can take part of the phase currents and thus reduce the load on the bypass arrangement while allowing a very cheap design.

According to an embodiment, at least one active filter cell is arranged for each phase of the electronic converter, at least one bypass arrangement is arranged for each active filter cell, and wherein the bypass signal is sent to each of the bypass arrangements. In case of each of the bypass arrangement comprising two or more bypass switches, the bypass signal may be sent to each of the bypass switches. The electronic converter may have at least one phase, e.g., one, two, three, or four.

According to an embodiment, the converter arrangement comprises the controller being communicatively coupled to the electronic converter and the bypass arrangement.

According to an embodiment, at least two active filter cells are arranged within the same phase, and one bypass arrangement is arranged per active filter cell. So, there may be as many bypass arrangements as there are active filter cells, and the current through the phase may be bypassed around these active filter cells by the corresponding bypass arrangements.

According to an embodiment, at least two active filter cells are arranged within the same phase, and one bypass arrangement is arranged for all active filter cells within the same phase. So, the current in at least one of the phases may be bypassed around the corresponding active filter cells by the same bypass arrangement.

According to an embodiment, the active filter cells within the same phase are electrically arranged in series, or the active filter cells within the same phase are electrically arranged in parallel.

According to an embodiment, at least one bypass arrangement has a mechanical bypass switch. The mechanical bypass switch may be configured for being controlled electronically and for interrupting or establishing the current path through the corresponding phase mechanically.

According to an embodiment, at least one bypass arrangement has a two antiparallel bypass thyristors.

According to an embodiment, at least one bypass arrangement has a diode bridge with a bypass thyristor.

These and other aspects of the invention will be apparent from and elucidated with reference to the embodiments described hereinafter.

### BRIEF DESCRIPTION OF THE DRAWINGS

The subject matter of the invention will be explained in more detail in the following text with reference to exemplary embodiments which are illustrated in the attached drawings.
Fig. 1 shows a block diagram of an exemplary embodiment of a converter arrangement;
Fig. 2 shows a block diagram of an exemplary embodiment of a converter arrangement;
Fig. 3 shows a block diagram of an exemplary embodiment of a converter arrangement;
Fig. 4 shows a block diagram of an exemplary embodiment of a converter arrangement;
Fig. 5 shows a block diagram of an exemplary embodiment of a converter arrangement;
Fig. 6 shows a block diagram of an exemplary embodiment of an active filter cell and a bypass arrangement;
Fig. 7 shows a block diagram of an exemplary embodiment of an active filter cell and a bypass arrangement;
Fig. 8 shows a block diagram of an exemplary embodiment of an active filter cell and a bypass arrangement; and
Fig. 9 shows a flow diagram of an exemplary embodiment of a method for operating a converter arrangement.

The reference symbols used in the drawings, and their meanings, are listed in summary form in the list of reference symbols. In principle, identical parts are provided with the same reference symbols in the figures.

### DETAILED DESCRIPTION OF EXEMPLARY EMBODIMENTS

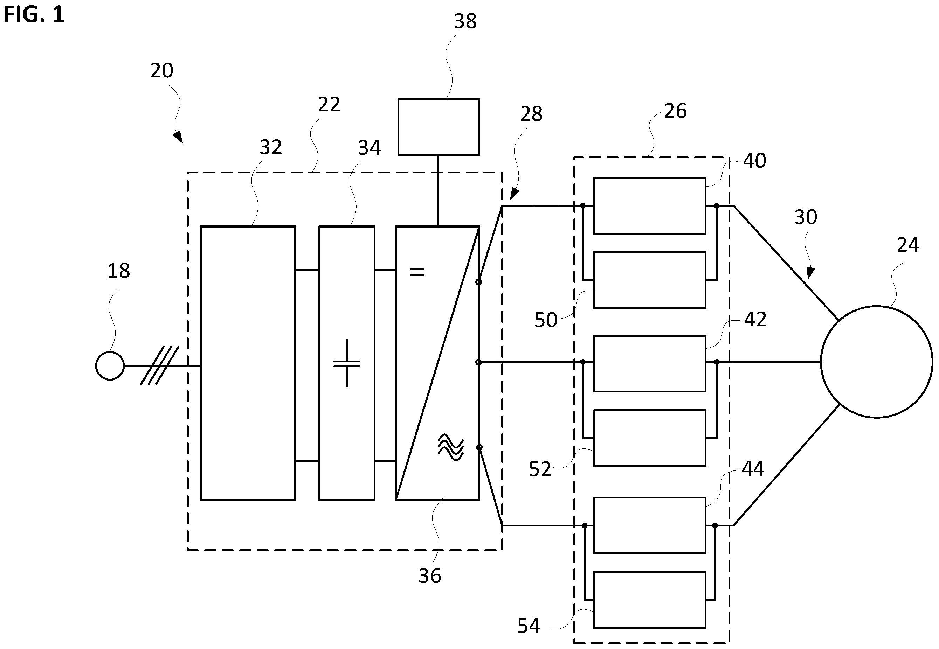

Fig. 1 shows a block diagram of an exemplary embodiment of a converter arrangement 20. The converter arrangement 20 has an electronic converter 22 and a filter cell arrangement 26. Optionally, the converter arrangement 20 comprises a controller 38 for operating the electronic converter 22 and the filter cell arrangement 26. Alternatively, the controller 38 may be external with respect to the converter arrangement 20.

The electronic converter 22 is configured for converting an input voltage from an energy source 18 into an output voltage to be provided to a load 24. The filter cell arrangement 26 electrically couples an output terminal 28 of the electronic converter 22 with an input terminal of the load 24. The electronic converter 22 may comprise a power converter 32, e.g., an inverter or a rectifier, a dc-link 34, and a switching stage 36, as it is known in the art. The electronic converter 22, in particular the switching stage 36 may comprise several semiconductor switches, e.g., several IGCTs. The electronic converter 22 may be a 3-phase 3-level NPC converter, for example.

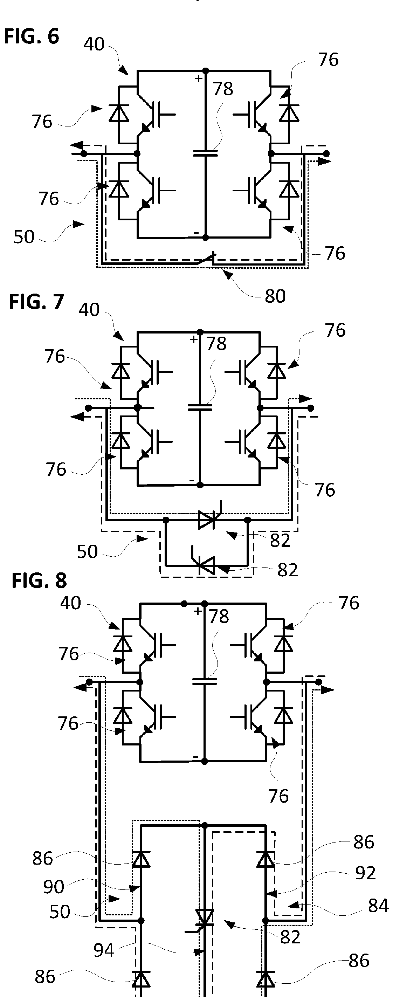

The filter cell arrangement 26 has at least one active filter cell, e.g. at least one active filter cell per phase of the electronic converter 22, e.g., a first active filter cell 40 within a first phase of the electronic converter 22, a second active filter cell 42 within a second phase of the electronic converter 22, and a third active filter cell 44 within a third phase of the electronic converter 22. The electronic converter 22 has at least one phase, e.g., one, two, three, or four, and at least one of the active filter cells 40, 42, 44 may be arranged for each of the phases. The filter cell arrangement 26, in particular the active filter cells 40, 42, 44 are configured to reduce harmonic oscillations of the output voltage. Each active filter cell 40, 42, 44 may comprise several semiconductor switches (see figures 6, 7, and 8), e.g., several IGBTs.

In addition, the converter arrangement 20, in particular the filter cell arrangement 26, has at least one bypass arrangement for bypassing a current from the load 24 to the electronic converter 22 or from the electronic converter 22 to the load 24 around the active filter cells 40, 42, 44. For example, there may be at least one bypass arrangement per phase, and/or at least one bypass arrangement may be arranged for each active filter cell 40, 42, 44. For example, a first bypass arrangement 50 may be arranged within the first phase, a second bypass arrangement 52 may be arranged within the second phase, and a third bypass arrangement 54 may be arranged within the third phase. The first bypass arrangement 50 may be arranged electrically in parallel with the first active filter cell 40. The second bypass arrangement 52 may be arranged electrically in parallel with the second active filter cell 42. The third bypass arrangement 54 may be arranged electrically in parallel with the third active filter cell 44.

The first bypass arrangement 50 may be configured for bypassing the current within the first phase around the first active filter cell 40. The second bypass arrangement 52 may be configured for bypassing the current within the second phase around the second active filter cell 42. The third bypass arrangement 54 may be configured for bypassing the current within the third phase around the third active filter cell 44.

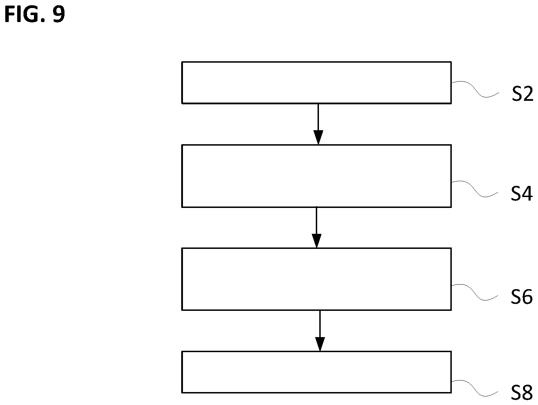

The converter arrangement 20 may comprise a controller (not shown) being communicatively coupled to the electronic converter 22 and the bypass arrangement(s) 50, 52, 54. The controller is configured for operating the converter arrangement 20. The controller comprises a memory for storing one or more current and/or voltage values, and a processor communicatively coupled to the memory and being configured for carrying out the method as described with respect to figure 9 based on the stored current and/or voltage values.

The load 24 may be a motor, a generator, a grid, or a transformer coupled to the grid, for example.

In an alternative embodiment, the filter cell arrangement 26 may be arranged such that the filter cell arrangement 26 couples an output terminal of the energy source 18 with the input terminal 30 of the converter arrangement 20. In this case, the filter cell arrangement 26, in particular the active filter cells 40, 42, 44 are configured to reduce harmonic oscillations of the input voltage. Further in this case, the bypass arrangement(s) 50, 52, 54 may be configured for bypassing a current from the energy source 18 to the electronic converter 22 or from the electronic converter 22 to the energy source 18 around the active filter cells 40, 42, 44. A figure of this alternative embodiment may be the same as shown in figure 1 except for the load 24 and the energy source 18 being changed. In other words, when changing the reference signs 18 and 24 with each other, figure 1 already shows the alternative embodiment. Because it is clear to a person skilled in the art, how to realize such a simple modification of the block diagram in figure 1 and because of reasons of conciseness, a separate figure for this alternative embodiment is omitted.

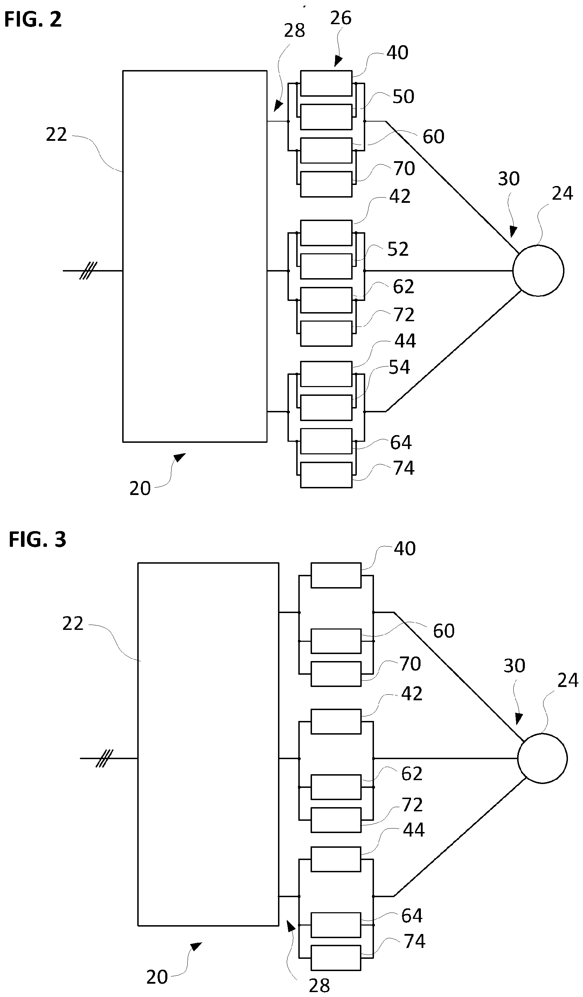

Fig. 2 shows a block diagram of an exemplary embodiment of a converter arrangement 20. The converter arrangement 20 may widely correspond to the converter arrangement 20 described with respect to figure 1. Therefore, only those features in which the converter arrangement 20 shown in figure 2 differs from the converter arrangement 20 shown in figure 1 are explained in the following.

The converter arrangement 20 may have at least two active filter cells 40, 60, 42, 62, 44, 64 arranged within the same phase. For example, the first active filter cell 40 and a fourth active filter cell 60 may be arranged within the first phase, the second active filter cell 42 and a fifth active filter cell 62 may be arranged within the second phase, and the third active filter cell 44 and a sixth active filter cell 64 may be arranged within the third phase. The active filter cells 40, 60, 42, 62, 44, 64 within the same phase may be electrically arranged in parallel to each other.

Further, one bypass arrangement 50, 70, 52, 72, 54, 74 may be arranged per active filter cell 40, 60, 42, 62, 44, 64. For example, the first bypass arrangement 50 may be arranged to bypass the current around the first active filter cell 40 and a fourth bypass arrangement 70 may be arranged to bypass the current around the fourth active filter cell 60, the second bypass arrangement 52 may be arranged to bypass the current around the second active filter cell 42 and a fifth bypass arrangement 72 may be arranged to bypass the current around the fifth active filter cell 62, and the third bypass arrangement 54 may be arranged to bypass the current around the third active filter cell 44 and a sixth bypass arrangement 74 may be arranged to bypass the current around the sixth active filter cell 64.

In general, there may be as many bypass arrangements 50, 70, 52, 72, 54, 74 as there are active filter cells 40, 60, 42, 62, 44, 64, and the current through the corresponding phases may be bypassed around these active filter cells 40, 60, 42, 62, 44, 64 by the corresponding bypass arrangements 50, 70, 52, 72, 54, 74.

Fig. 3 shows a block diagram of an exemplary embodiment of a converter arrangement 20. The converter arrangement 20 may widely correspond to the converter arrangement 20 described with respect to figure 2. Therefore, only those features in which the converter arrangement 20 shown in figure 3 differs from the converter arrangement 20 shown in figure 2 are explained in the following.

In this embodiment, one bypass arrangement 70, 72, 74 is arranged for all active filter cells 40, 60, 42, 62, 44, 64 within the same phase. So, the current in at least one of the phases may be bypassed around the corresponding active filter cells 40, 60, 42, 62, 44, 64 by the same bypass arrangement 70, 72, 74.

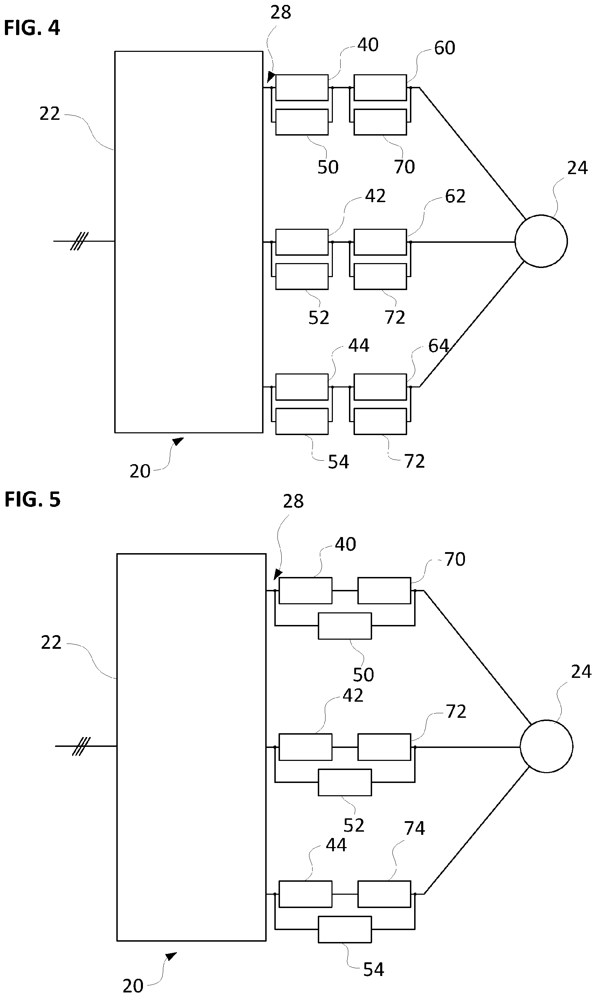

Fig. 4 shows a block diagram of an exemplary embodiment of a converter arrangement 20. The converter arrangement 20 may widely correspond to the converter arrangement 20 described with respect to figures 1 or 2. Therefore, only those features in which the converter arrangement 20 shown in figure 4 differs from the converter arrangements 20 shown in figures 1 and 2 are explained in the following.

In this embodiment, at least two active filter cells 40, 60, 42, 62, 44, 64 may be arranged within the same phase, and the active filter cells 40, 60, 42, 62, 44, 64 within the same phase may be electrically arranged in series. Further, one bypass arrangement 50, 70, 52, 72, 54, 74 may be arranged per active filter cell 40, 60, 42, 62, 44, 64 for bypassing the current around the corresponding active filter cell 40, 60, 42, 62, 44, 64. In general, there may be as many bypass arrangements 50, 70, 52, 72, 54, 74 as there are active filter cells 40, 60, 42, 62, 44, 64, and the current through each of the phases may be bypassed around these active filter cells 40, 60, 42, 62, 44, 64 by the corresponding bypass arrangements 50, 70, 52, 72, 54, 74.

Fig. 5 shows a block diagram of an exemplary embodiment of a converter arrangement 20. The converter arrangement 20 may widely correspond to the converter arrangement 20 described with respect to figures 3 or 4. Therefore, only those features in which the converter arrangement 20 shown in figure 5 differs from the converter arrangements 20 shown in figures 3 and 4 are explained in the following.

In this embodiment, at least two active filter cells 40, 60, 42, 62, 44, 64 are arranged within the same phase, the active filter cells 40, 60, 42, 62, 44, 64 within the same phase are electrically arranged in series, and one bypass arrangement 50, 70, 52, 72, 54, 74 may be arranged for all active filter cells 40, 60, 42, 62, 44, 64 within the same phase. So, the current in at least one of the phases may be bypassed around the corresponding active filter cells 40, 60, 42, 62, 44, 64 by the same bypass arrangement 50, 70, 52, 72, 54, 74.

All above-described embodiments of the converter arrangement 20 may be altered such that the filter cell arrangement 26 couples the output terminal of the energy source 18 with the input terminal 30 of the converter arrangement 20, as described in context with the alternative of the embodiment described with respect to figure 1, in particular within the last paragraph of the description of figure 1. Because it is clear to a person skilled in the art, how to realize such simple modifications and because of reasons of conciseness, separate figures for these alternative embodiments are omitted.

Fig. 6 shows a block diagram of an exemplary embodiment of an active filter cell, e.g., the first active filter cell 40, and of a bypass arrangement, e.g., the first bypass arrangement 50. The first active filter cell 40 and the first bypass arrangement 50 may be used for one or more of the converter arrangements 20 explained in the foregoing. The other active filter cells 60, 42, 62, 44, 64 and/or the other bypass arrangements 70, 52, 72, 54, 74 of the converter arrangements 20 may be configured correspondingly.

The first active filter cell 40 may comprise a full (diode) bridge having four semiconductor switches 76 and a dc-link 78 of the first active filter cell 40.

In this embodiment, the first bypass arrangement 50 may have a mechanical bypass switch 80 for bypassing the current around the first active filter cell 40. The mechanical bypass switch 80 may be configured for being controlled electronically, e.g., by the controller, and for interrupting or establishing the current path around the first active filter cell 40. For example, the mechanical bypass switch 80 may be configured to open and as such for bypassing the current in the first phase around the first active cell 40 upon receiving the corresponding bypass signal from the controller, as explained in more detail with respect to figure 9.

Fig. 7 shows a block diagram of an exemplary embodiment of an active filter cell, e.g., of the first active filter cell 40, and of a bypass arrangement, e.g., of the first bypass arrangement 50. The first active filter cell 40 and the first bypass arrangement 50 may be used for one or more of the converter arrangements 20 explained in the foregoing. The other active filter cells 60, 42, 62, 44, 64 and/or the other bypass arrangements 70, 52, 72, 54, 74 of the converter arrangements 20 may be configured correspondingly.

The first active filter cell 40 may comprise the full bridge having four semiconductor switches 76 and a dc-link 78 of the first active filter cell 40.

In this embodiment, the first bypass arrangement 50 may have two antiparallel bypass thyristors 82 for bypassing the current around the first active filter cell 40. The bypass thyristors 82 may be configured for being controlled electronically, e.g., by the controller, and for interrupting or establishing the current path around the first active filter cell 40. For example, the bypass thyristor 82 may be configured for bypassing the current in the first phase around the first active cell 40 upon receiving the corresponding bypass signal from the controller, as explained in more detail with respect to figure 9.

Fig. 8 shows a block diagram of an exemplary embodiment of an active filter cell, e.g., of the first active filter cell 40, and a bypass arrangement, e.g., of the first bypass arrangement 50. The first active filter cell 40 and the first bypass arrangement 50 may be used for one or more of the converter arrangements 20 explained in the foregoing. The other active filter cells 60, 42, 62, 44, 64 and/or the other bypass arrangements 70, 52, 72, 54, 74 of the converter arrangements 20 may be configured correspondingly.

The first active filter cell 40 may comprise the full bridge having the four semiconductor switches 76 and the dc-link 78 of the first active filter cell 40.

In this embodiment, the first bypass arrangement 50 may have a diode bridge 84 with four diodes 86 and a bypass thyristor 82 for bypassing the current around the first active filter cell 40. For example, the diodes 86 may be arranged in correspondence to the semiconductor switches 76 of the full bridge of the first active filter cell 40 and the bypass thyristor 82 may be arranged in correspondence to the dc-link of the first active filter cell 40. In other words, the diodes 86 may form a full bridge in which two branches in parallel with each other, e.g., a first branch 90 and a second branch 92, each comprising two of the diodes 86 oriented such that their forward direction, in other words flow direction, is directed in the same direction are "bridged" by a third branch 94 connected between the first two branches 90, 92 at two opposite intermediate points along them, wherein the bypass thyristor 82 is arranged within the third branch 94.

The bypass thyristor 82 may be configured for being controlled electronically, e.g., by the controller, and for interrupting or establishing the current path around the first active filter cell 40. For example, the diodes 86 and the bypass thyristor 82 may be configured for bypassing the current in the first phase around the first active cell 40 upon receiving the corresponding bypass signal from the controller, as explained in more detail with respect to figure 9.

Optionally, the positive side of the DC-link 78 of the first active filter cell 40 may be electrically coupled with a positive side of the diode bridge 84, in particular with the anode of the bypass thyristor 82, by a first resistor (not shown), and the negative side of the DC-link 78 of the first active filter cell 40 may be electrically coupled with a negative side of the diode bridge 84, in particular with the cathode of the bypass thyristor 82, by a second resistor (not shown).

Fig. 9 shows a flow diagram of an exemplary embodiment of a method for operating a converter arrangement, e.g., one of the converter arrangements 20 shown in figures 1 to 5. The method may be carried out by the controller.

In a step S2, at least one sensor signal being representative of a danger for the electronic converter 22 because of an electric problem of the electronic converter 22 may be received, in particular by the controller.

The sensor signal may be generated by a sensor (not shown) of the electronic converter 22, by a sensor of one or more of the active filter cells 40, 60, 42, 62, 44, 64, or of a sensor being coupled to the electronic converter 22 or one or more of the active filter cells 40, 60, 42, 62, 44, 64. The sensor may be a voltage sensor, a current sensor, or an optical sensor. The sensor signal may be representative of a measured current value exceeding a predetermined current threshold, or of a measured voltage value exceeding a predetermined voltage threshold. The current value may be representative of a current within the electronic converter 22 or within one or more of the active filter cells 40, 60, 42, 62, 44, 64. The voltage value may be representative of a voltage within the electronic converter 22 or within the corresponding active filter cell 40, 60, 42, 62, 44, 64. The current may be a phase current. The voltage may be a capacitor voltage.

The danger may be a damage of the electronic converter 22 and/or of one or more of the active filter cells 40, 60, 42, 62, 44, 64. The electric problem may be an internal short circuit of the electronic converter 22, an arcing phenomenon in the electronic converter 22, an over-voltage or an over-current in the electronic converter 22, and/or a short circuit at a dc-link 34 of the electronic converter 22.

In a step S2, a protection signal may be sent to the electronic converter 22. The protection signal and the electronic converter 22 are configured such that the electronic converter 22 activates protective firing upon receiving the protection signal. The activation of the protective firing may comprise discharging the dc-link 34 of the electronic converter 22, and/or shortening all input terminals and all output terminals of the electronic converter 22.

In an optional step S4, a zero-voltage signal may be sent to one or more of the active filter cells 40, 60, 42, 62, 44, 64, wherein the zero-voltage signal and the corresponding active filter cells 40, 60, 42, 62, 44, 64 may be configured such that the corresponding active filter cell 40, 60, 42, 62, 44, 64 outputs a zero-voltage upon receiving the zero-voltage signal. For example, the corresponding active filter cell 40, 60, 42, 62, 44, 64 has upper and lower semiconductor switches (not shown) and the zero-voltage signal and the corresponding active filter cell 40, 60, 42, 62, 44, 64 are configured such that both upper semiconductor switches or both lower semiconductor switches are turned on to provide the zero voltage.

In a step S6, a bypass signal may be sent to one or more of the bypass arrangements 50, 70, 52, 72, 54, 74, wherein the bypass signal and the corresponding bypass arrangements 50, 70, 52, 72, 54, 74 are configured such that the corresponding bypass arrangement 50, 70, 52, 72, 54, 74 bypasses the current from the load 24 to the electronic converter 22 or, respectively, from the electronic converter 22 to the load 24 around the corresponding active filter cells 40, 60, 42, 62, 44, 64 upon receiving the bypass signal. In case of the optional step S4 having been carried out, the bypass signal may be sent after a predetermined first delay after sending the zero-voltage signal. The sending of the bypass signal may be triggered by the reception of the sensor signal or by the sending of the protection signal.

In case of the alternative embodiment(s), in which the active filter cells 40, 42, 44 electrically couple the input terminal 30 of the electronic converter 22 with the output terminal of the energy source 18, the bypass signal and the corresponding bypass arrangements 50, 70, 52, 72, 54, 74 may be configured such that the corresponding bypass arrangement 50, 70, 52, 72, 54, 74 bypasses the current from the energy source 18 to the electronic converter 22 or, respectively, from the electronic converter 22 to the energy source 18 around the corresponding active filter cells 40, 60, 42, 62, 44, 64 upon receiving the bypass signal.

In case of the electronic converter 22 having at least two phases, with at least one active filter cell 40, 60, 42, 62, 44, 64 being arranged for each of the phases, and with at least one bypass arrangement 50, 70, 52, 72, 54, 74 being arranged for each of the active filter cells 40, 60, 42, 62, 44, 64, the bypass signal may be sent to each of the bypass arrangements 50, 70, 52, 72, 54, 74. In case of each of the bypass arrangements 50, 70, 52, 72, 54, 74 comprising two or more bypass switches 80 or bypass thyristors 82, the bypass signal may be sent to each of the bypass switches 80 or, respectively, to each of the bypass thyristors 82.

In an optional step S8, a turn off signal may be sent to one or more of the active filter cells 40, 60, 42, 62, 44, 64, wherein the turn off signal and the corresponding active filter cells 40, 60, 42, 62, 44, 64 may be configured such that all semiconductor switches of the corresponding active filter cell 40, 60, 42, 62, 44, 64 are turned off upon receiving the turn off signal. This may be especially advantageous in case of the zero-voltage signal having been sent in step S4 to the corresponding active filter cell 40, 60, 42, 62, 44, 64 before sending the bypass signal. Alternatively, sending the turn off signal may be omitted. In this case, the semiconductor switches of the corresponding active filter cell 40, 60, 42, 62, 44, 64 may take part of the phase currents and thus may reduce the load on the corresponding bypass arrangement 50, 70, 52, 72, 54, 74 while contributing to a very cheap design of the converter arrangement 20.

The method may be embodied as a computer program for operating the converter arrangement 20. The computer program comprises computer-readable instructions which, when being executed by a processor of the controller, carry out the method as described above.

The computer program may be stored on a computer-readable medium. The computer-readable medium may be a floppy disk, a hard disk, an USB (Universal Serial Bus) storage device, a RAM (Random Access Memory), a ROM (Read Only Memory), an EPROM (Erasable Programmable Read Only Memory) or a FLASH memory. The computer-readable medium may also be a data communication network, e.g. the Internet, which allows downloading a program code. In general, the computer-readable medium may be a non-transitory or transitory medium.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

### LIST OF REFERENCE SYMBOLS

| | |
|---|---|
| energy source | 18 |
| converter arrangement | 20 |
| electronic converter | 22 |
| load | 24 |
| filter cell arrangement | 26 |
| output terminal | 28 |
| input terminal | 30 |
| power converter | 32 |
| dc-link of electronic converter | 34 |
| switching stage | 36 |
| controller | 38 |
| first active filter cell | 40 |
| second active filter cell | 42 |
| third active filter cell | 44 |
| first bypass arrangement | 50 |
| second bypass arrangement | 52 |
| third bypass arrangement | 54 |
| fourth active filter cell | 60 |
| fifth active filter cell | 62 |
| sixth active filter cell | 64 |
| fourth bypass arrangement | 70 |
| fifth bypass arrangement | 72 |
| sixth bypass arrangement | 74 |
| semiconductor switch | 76 |
| dc-link of first active filter cell | 78 |
| mechanical bypass switch | 80 |
| bypass thyristor | 82 |
| diode bridge | 84 |
| diode | 86 |
| first branch | 90 |
| second branch | 92 |
| third branch | 94 |
| steps two to eight | S2 - S8 |

## Claims

1. A method for operating a converter arrangement (20), the converter arrangement (20) comprising an electronic converter (22) for converting an input voltage from an energy source (18) into an output voltage to be provided to a load (24), at least one active filter cell (40, 42, 44) for reducing harmonic oscillations of the output voltage or of the input voltage, wherein the active filter cell (40, 42, 44) electrically couples an output terminal (28) of the electronic converter (22) with an input terminal of the load (24) or, respectively, wherein the active filter cell (40, 42, 44) electrically couples an input terminal (30) of the electronic converter (22) with an output terminal of the energy source (18), and a bypass arrangement (50, 52, 54) for bypassing a current to or from the electronic converter (22) around the active filter cell (40, 42, 44), the method comprising:
receiving at least one sensor signal being representative of a danger for the electronic converter (22) because of an electric problem of the electronic converter (22);
sending a protection signal to the electronic converter (22), wherein the protection signal and the electronic converter (22) are configured such that the electronic converter (22) activates protective firing upon receiving the protection signal; and
sending a bypass signal to the bypass arrangement (50, 52, 54), wherein the bypass signal and the bypass arrangement (50, 52, 54) are configured such that the bypass arrangement (50, 52, 54) bypasses a current from the load (24) to the electronic converter (22) or, respectively, from the electronic converter (22) to the load (24) around the active filter cell (40, 42, 44) upon receiving the bypass signal.

2. The method according to claim 1, after sending the protection signal and before sending the bypass signal comprising:
sending a zero-voltage signal to the active filter cell (40, 42, 44), wherein the zero-voltage signal and the active filter cell (40, 42, 44) are configured such that the active filter cell (40, 42, 44) outputs a zero-voltage upon receiving the zero-voltage signal.

3. The method according to one of the preceding claims, after sending the bypass signal comprising:
sending a turn off signal to the active filter cell (40, 42, 44), wherein the turn off signal and the active filter cell (40, 42, 44) are configured such that all semiconductor switches of the active filter cell (40, 42, 44) are turned off upon receiving the turn off signal.

4. The method according to one of the preceding claims, wherein
at least one active filter cell (40, 42, 44) is arranged for each phase of the electronic converter (22),
at least one bypass arrangement (50, 52, 54) is arranged for each active filter cell (40, 42, 44), and
wherein the bypass signal is sent to each of the bypass arrangements (50, 52, 54).

5. A controller (38) for operating a converter arrangement (20), the converter arrangement (20) comprising an electronic converter (22) for converting an input voltage from an energy source (18) into an output voltage to be provided to a load (24), at least one active filter cell (40, 42, 44) for reducing harmonic oscillations of the output voltage or of the input voltage, wherein the active filter cell (40, 42, 44) electrically couples an output terminal (28) of the electronic converter (22) with an input terminal of the load (24) or, respectively, wherein the active filter cell (40, 42, 44) electrically couples an input terminal (30) of the electronic converter (22) with an output terminal of the energy source (18), and a bypass arrangement (50, 52, 54) for bypassing a current to or from the electronic converter (22) around the active filter cell (40, 42, 44), the controller (38) comprising:
a memory for storing one or more current and/or voltage values; and
a processor communicatively coupled to the memory and being configured for carrying out the method in accordance with one of the preceding claims based on the stored current and/or voltage values.

6. A converter arrangement (20), comprising:
an electronic converter (22) for converting an input voltage from an energy source (18) into an output voltage to be provided to a load (24);
at least one active filter cell (40, 42, 44) for reducing harmonic oscillations of the output voltage or of the input voltage, wherein the active filter cell (40, 42, 44) electrically couples an output terminal (28) of the electronic converter (22) with an input terminal of the load (24) or, respectively, wherein the active filter cell (40, 42, 44) electrically couples an input terminal (30) of the electronic converter (22) with an output terminal of the energy source (18); and
a bypass arrangement (50, 52, 54) for bypassing a current to or from the electronic converter (22) around the active filter cell (40, 42, 44).

7. The converter arrangement (20) according to claim 6, comprising:
the controller (38) according to claim 5 being communicatively coupled to the electronic converter (22) and the bypass arrangement (50, 52, 54).

8. The converter arrangement (20) according to claim 7, wherein
at least two active filter cells (40, 42, 44) are arranged within the same phase, and one bypass arrangement (50, 52, 54) is arranged per active filter cell (40, 42, 44).

9. The converter arrangement (20) according to claim 7, wherein
at least two active filter cells (40, 42, 44) are arranged within the same phase, and one bypass arrangement (50, 52, 54) is arranged for all active filter cells (40, 42, 44) within the same phase.

10. The converter arrangement (20) according to one of claims 8 or 9, wherein
the active filter cells (40, 42, 44) within the same phase are electrically arranged in series, or
the active filter cells (40, 42, 44) within the same phase are electrically arranged in parallel.

11. The converter arrangement (20) according to one of claims 6 to 10, wherein
at least one bypass arrangement (50, 52, 54) has a mechanical bypass switch (80).

12. The converter arrangement (20) according to one of claims 6 to 10, wherein
at least one bypass arrangement (50, 52, 54) has a two antiparallel bypass thyristors (82).

13. The converter arrangement (20) according to one of claims 6 to 10, wherein
at least one bypass arrangement (50, 52, 54) has a diode bridge (84) with a bypass thyristor (82).

14. A computer program for operating a converter arrangement (20), the computer program comprising computer-readable instructions which, when being executed by a processor of a controller (38) according to claim 5, carry out the method in accordance with one of claims 1 to 4.

15. Computer-readable medium on which a computer program according to claim 14 is stored.
